# EUROPEAN PATENT APPLICATION

(11) **EP 3 145 264 A1**
(43) Date of publication of application: **22.03.2017**
(21) Application number: 15793420.9
(22) Date of filing: 13.05.2015
(51) Int. Cl.: H04W 72/04, H04W 16/14, H04W 72/12

(54) **WIRELESS BASE STATION, USER TERMINAL, AND WIRELESS COMMUNICATION SYSTEM**

(30) Priority: 15.05.2014 JP 2014101527
(71) Applicant: NTT DOCOMO, INC., Chiyoda-ku Tokyo 100-6150 (JP)
(72) Inventor: TAKEDA, Kazuki, Tokyo 100-6150 (JP); HARADA, Hiroki, Tokyo 100-6150 (JP); WANG, Jing, Beijing 100-190 (CN); LIU, Liu, Beijing 100190 (CN); JIANG, Yu, Beijing 100190 (CN); JIANG, Huiling, Beijing 100190 (CN)
(74) Representative: Hoffmann Eitle
(86) International application number: PCT/JP2015/063714
(87) International publication number: WO 2015/174437

(57) **Abstract**

The present invention is designed so that LBT (Listen Before Talk) is performed adequately in a radio communication system (LAA) to run LTE in an unlicensed band. A radio base station to communicate with a user terminal that is capable of using a licensed band and an unlicensed band has a control section that controls the transmission of downlink signals in the unlicensed band using LBT, a selection section that selects the symbol to execute LBT, randomly, with equal probability, from a plurality of candidate symbols, and an acquiring section that acquires a measurement result, in which the received signal intensity in the LBT period is measured, wherein, when the control section judges that the channel of the unlicensed band is in an idle state from the measurement result of received signal intensity, the control section executes control so that a beacon reference signal is transmitted in all of the candidate symbols that follow the symbol in which LBT was executed.

## Description

### Technical Field

The present invention relates to a radio base station, a user terminal and a radio communication system in a next-generation mobile communication system.

### Background Art

In the UMTS (Universal Mobile Telecommunications System) network, the specifications of long term evolution (LTE) have been drafted for the purpose of further increasing high speed data rates, providing lower delays and so on (see non-patent literature 1). In LTE, as multiple-access schemes, a scheme that is based on OFDMA (Orthogonal Frequency Division Multiple Access) is used in downlink channels (downlink), and a scheme that is based on SC-FDMA (Single Carrier Frequency Division Multiple Access) is used in uplink channels (uplink).

Successor systems of LTE (referred to as, for example, "LTE-advanced" or "LTE enhancement" (hereinafter referred to as "LTE-A")) have been under study for the purpose of achieving further broadbandization and increased speed beyond LTE. In the LTE-A system, a HetNet (Heterogeneous Network), in which small cells (for example, pico cells, femto cells and so on), each having a local coverage area of a radius of approximately several tens of meters, are formed inside a macro cell having a wide coverage area of a radius of approximately several kilometers, is under study (see non-patent literature 2). Furthermore, in relationship to the HetNet, a study is also in progress to use carriers of different frequency bands, in addition to carriers of the same frequency band, between the macro cell (macro base station) and the small cells (small base stations).

Furthermore, for future radio communication systems (Rel. 12 and later versions), a system ("LTE-U" (LTE Unlicensed) or "LAA" (Licensed-Assisted Access)) to run LTE systems not only in frequency bands licensed to communications providers (operators) (licensed bands), but also in frequency bands where license is not required (unlicensed bands), is under study. A licensed band is a band in which a specific provider is allowed exclusive use, and an unlicensed band is a band which is not limited to a specific provider and in which radio stations can be provided.

For unlicensed bands, for example, the 2.4 GHz band and the 5 GHz band where Wi-Fi and Bluetooth (registered trademark) can be used, the 60 GHz band where millimeter-wave radars can be used, and so on are under study for use. Studies are in progress to use such unlicensed bands in small cells.

### Citation List

### Non-Patent Literature

Non-Patent Literature 1: 3GPP TS 36.300 "Evolved Universal Terrestrial Radio Access (E-UTRA) and Evolved Universal Terrestrial Radio Access Network (E-UTRAN); Overall Description; Stage 2"
Non-Patent Literature 2: 3GPP TR 36.814 "E-UTRA Further Advancements for E-UTRA Physical Layer Aspects"

### Summary of Invention

### Technical Problem

Existing LTE presumes operation in licensed bands, and therefore each operator is allocated a different frequency band. However, unlike a licensed band, an unlicensed band is not limited to use by a specific provider. Furthermore, unlike a licensed band, an unlicensed band is not limited to use in a specific radio system (for example, LTE, Wi-Fi, etc.). Consequently, there is a possibility that the frequency band which a given operator uses in LAA overlaps the frequency band which another operator uses in LAA and/or Wi-Fi.

An unlicensed band may be run without even synchronization, coordination and/or cooperation between different operators and/or non-operators. Furthermore, these different operators and/or non-operators may set up radio access points (APs) and/or radio base stations (eNBs) without even coordinating and/or cooperating with each other. In this case, unlike a licensed band, there is a threat that significant cross-interference is produced in the unlicensed band.

So, in Wi-Fi systems that are run in unlicensed bands, carrier sense multiple access/collision avoidance (CSMA/CA), which is based on the mechanism of LBT (Listen Before Talk), is employed. To be more specific, for example, a method, whereby each transmission point (TP) or access point (AP) and user terminal performs "listening" (CCA: Clear Channel Assessment) before carrying out transmission, and carries out transmission only when there is no signal beyond a predetermined level, is used. When there is a signal to exceed a predetermined level, a waiting time is provided, which is determined on a random basis, and, following this, listening is performed again.

In LAA systems, as in Wi-Fi systems, a method to stop transmission depending on the result of listening (LBT and random backoff) may be employed. For example, in an unlicensed band cell, it may be possible to perform listening before transmitting a signal, check whether other systems (for example, Wi-Fi) and/or other LAA transmission points are engaged in communication, and control whether or not to transmit the signal depending on the result of LBT.

If, as a result of listening, no signal from other systems and/or other LAA transmission points is detected, communication with user terminals is established in an unlicensed band. If, as a result of listening, signals from other system and/or other LAA transmission points are detected, a transition to another carrier may be made by way of DFS (Dynamic Frequency Selection), transmission power control (TPC) may be applied, or data communication may be held (stopped).

The present invention has been made in view of the above, and it is therefore an object of the present invention to provide a radio base station, a user terminal and a radio communication system, whereby LBT can be carried out adequately in a radio communication system (LAA) to run LTE in an unlicensed band.

### Solution to Problem

The radio base station of the present invention is provided in the form of a radio base station that communicates with a user terminal that is capable of using a licensed band and an unlicensed band, and that has a control section that controls transmission of downlink signals in the unlicensed band using LBT (Listen Before Talk), a selection section that selects a symbol to execute LBT, randomly, with equal probability, from a plurality of candidate symbols, and an acquiring section that acquires a measurement result of received signal intensity in an LBT period is measured, and, in this radio base station, when the control section judges that a channel of the unlicensed band is in an idle state from the measurement result of received signal intensity, the control section executes control so that a beacon reference signal is transmitted in all candidate symbols that follow the symbol in which LBT was executed.

### Advantageous Effects of Invention

According to the present invention, it is possible to adequately carry out LBT in a radio communication system (LAA) to run LTE in an unlicensed band.

### Brief Description of Drawings

FIG. 1 is a diagram to show an example of operation mode to use LTE in an unlicensed band;
FIGs. 2 provide diagrams to show a plurality of scenarios of operation modes to use LTE in an unlicensed band;
FIG. 3 is a diagram to show an FDD downlink radio frame structure in conventional LTE, in accordance with a first example;
FIG. 4 is a diagram to show an LBT frame structure, in accordance with the first example;
FIGs. 5 provide diagrams to show structures in which a plurality of operators carry out LAA, in accordance with the first example;
FIG. 6 is a diagram to show a structure in which the same operator carries out LAA, in accordance with the first example;
FIG. 7 is a diagram to show a structure in which a plurality of operators carry out LAA, in accordance with the first example;
FIGs. 8 provide diagrams to show variations of the first example;
FIG. 9 is a diagram to show an LBT frame structure, in accordance with a second example;
FIG. 10 is a diagram to show an LBT frame structure, in accordance with the second example;
FIG. 11 is a diagram to show a structure in which a plurality of operators carry out LAA, in accordance with the second example;
FIGs. 12 provide diagrams to show a structure in which the same operator carries out LAA, in accordance with the second example;
FIGs. 13 provide diagrams to show variations of the second example;
FIG. 14 is a diagram to show existing TDD UL-DL configurations;
FIG. 15 is a diagram to show an LBT frame structure, in accordance with a third example;
FIG. 16 is a diagram to show an LBT frame structure, in accordance with the third example;
FIG. 17 is a diagram to show an LBT frame structure, in accordance with a third example;
FIGs. 18 provide diagrams to show LBT frame structures, in accordance with the third example;
FIGs. 19 provide diagrams to show variations of the third example;
FIGs. 20 provide diagrams to show variations of the third example;
FIG. 21 is a diagram to show an LBT frame structure, in accordance with a fourth example;
FIGs. 22 provide diagrams to show LBT frame structures, in accordance with the fourth example;
FIGs. 23 provide diagrams to show LBT frame structures, in accordance with the fourth example;
FIG. 24 is a diagram to show an example schematic structure of a radio communication system according to the present embodiment;
FIG. 25 is a diagram to show an overall structure of a radio base station according to the present embodiment;
FIG. 26 is a diagram to show a functional structure of a radio base station according to the present embodiment;
FIG. 27 is a diagram to show an overall structure of a user terminal according to the present embodiment; and
FIG. 28 is a diagram to show a functional structure of a user terminal according to the present embodiment.

### Description of Embodiments

Now, embodiments of the present invention will be described below in detail with reference to the accompanying drawings. Although the present embodiment will be described on the assumption that a frequency carrier in which LBT is not configured is a licensed band and a frequency carrier in which LBT is configured is an unlicensed band, this is by no means limiting. That is, the present embodiment is applicable regardless of whether a frequency carrier is a licensed band or an unlicensed band as long as LBT is configured in this frequency carrier.

As scenarios of a radio communication system (LAA) to run LTE in an unlicensed band, a plurality of scenarios may be possible, including carrier aggregation (CA), dual connectivity (DC), and stand alone. Cases will be assumed, in which, for example, a macro cell to use a licensed band of the 800 MHz band and a small cell to use an unlicensed band of the 5 GHz band are provided. Note that cells that employ carrier aggregation and/or dual connectivity are arranged so that their coverage areas overlap each other at least in part.

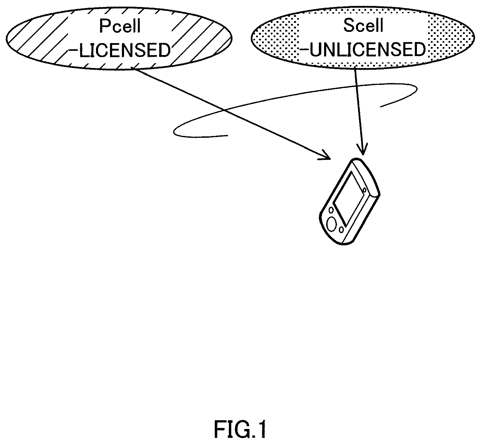

In this case, for example, as shown in FIG. 1, a scenario to employ carrier aggregation or dual connectivity may be possible, in which a macro cell to use a licensed band is a primary cell (Pcell) and a small cell to use an unlicensed band is a secondary cell (Scell).

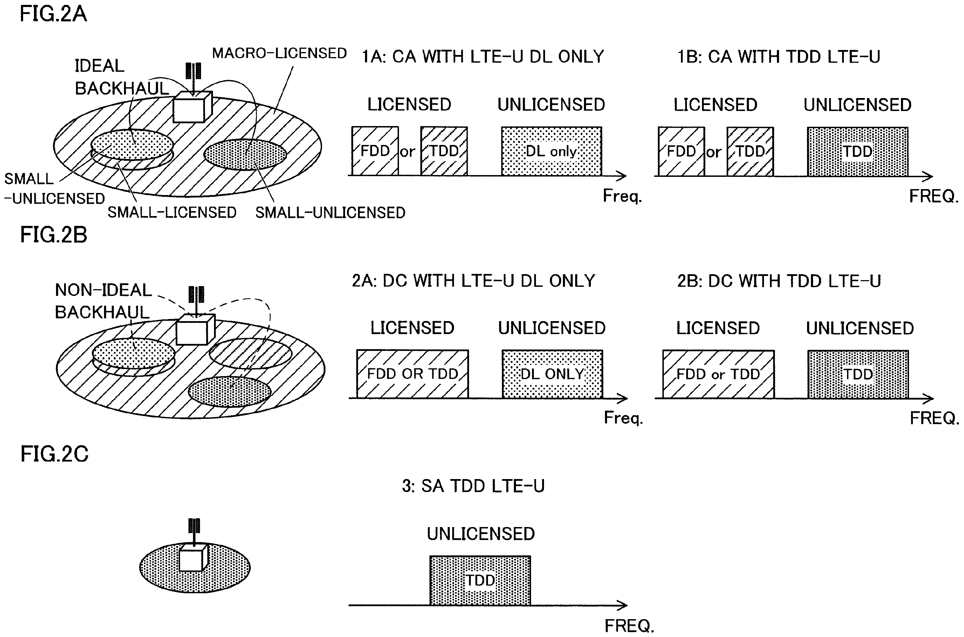

FIG. 2A shows a scenario in which carrier aggregation is executed using a licensed band and an unlicensed band. Carrier aggregation is a technique to bundle a plurality of component carriers (also referred to as "CCs," "carriers," "cells," etc.) into a wide band. Each CC has, for example, a maximum 20 MHz bandwidth, so that, when maximum five CCs are bundled, a wide band of maximum 100 MHz is provided. When carrier aggregation is employed, one radio base station's scheduler controls the scheduling of a plurality of CCs.

In the example shown in FIG. 2A, carrier aggregation is executed on the assumption that the macro cell or the small cell to use the licensed band is the primary cell and the small cell to use the unlicensed band is a secondary cell. In scenario 1A, a macro cell that is run in an FDD band (carrier) or a small use that is run in a TDD band is used in the primary cell, a carrier for exclusive use for downlink (DL) communication is used in the secondary cell. In scenario 1 B, a macro cell that is run in an FDD band or a small that is run in a TDD band is used in the primary cell, and a small cell that is run in a TDD band is used in the secondary cell.

FIG. 2B show a scenario to execute dual connectivity using a licensed band and an unlicensed band. Although dual connectivity is the same as carrier aggregation in bundling a plurality of CCs into a wide band, carrier aggregation is based on the assumption that cells (or CCs) are connected via ideal backhaul and are therefore capable of coordinated control, which produces very little delay time, whereas dual connectivity assumes cases in which cells are connected via non-ideal backhaul, which produces delay time that is more than negligible. Consequently, dual connectivity may be seen as a method, which runs cells in separate base stations, and in which a user terminal bundles cells (or CCs) of varying frequencies that are run in different base stations to provide a wide band. Considering the above, when dual connectivity is employed, a plurality of schedulers are provided individually, and each of these multiple schedulers controls the scheduling of one or more cells (CCs) managed thereunder. Note that, in dual connectivity, it is equally possible to apply carrier aggregation per scheduler that is provided individually.

In the example shown in FIG. 2B, dual connectivity is employed on the assumption that the macro cell to use the licensed band is the primary cell and the small cell to use the unlicensed band is a secondary cell. In scenario 2A, a macro cell that is run in an FDD band or a TDD band is used in the primary cell, and a carrier for exclusive use for DL communication is used in the secondary cell. In scenario 2B, a macro cell that is run in an FDD band or a TDD band is used in the primary cell, and a small cell that is run in a TDD band is used in the secondary cell.

In the example shown in FIG. 2C, stand alone is employed, in which a cell to run LTE using an unlicensed band operates alone. In scenario 3, the unlicensed band is run in a TDD band.

In the operation modes of carrier aggregation and dual connectivity shown in FIG. 2A and FIG. 2B, for example, it is possible to use the licensed band CC as the primary cell (PCell) and use the unlicensed band CC as a secondary cell (SCell). Here, the primary cell in carrier aggregation refers to the cell that manages RRC connection, handover and so on, and is also a cell that is required to communicate L1/L2 control signals (PUCCH) in the uplink (UL) in order to receive data and feedback signals from terminals. When carrier aggregation is executed, the primary cell is always configured in both the uplink and the downlink. A secondary cell refers to another cell that is configured apart from the primary cell when carrier aggregation is employed. A secondary cell may be configured in the downlink alone, or may be configured in both the uplink and the downlink at the same time. On the other hand, in dual connectivity, in addition to the primary cell, in at least one secondary cell, it is necessary to communicate uplink L1/L2 control signals (PUCCH) in the uplink (UL) in order to receive data and feedback signals from terminals. This is because each separate scheduler that is provided requires L1/L2 control signal (PUCCH) communication.

Considering that LAA is used in Wi-Fi systems and that LAA is used between a plurality of operators, the present inventors have arrived at providing a unified mechanism for executing LBT in a radio communication system (LAA) to run LTE in an unlicensed band. According to this mechanism, equality is guaranteed among a plurality of LAAs, and, furthermore, the performance of LAA can be improved.

In accordance with the present embodiment, an LBT mechanism for when an unlicensed band is used in downlink data off-loading alone will be described with a first and a second example, and an LBT mechanism for when an unlicensed band is used in downlink data and uplink data off-loading will be described with a third and a fourth example.

### (First Example)

Similar to scenarios 1A and 2A shown in FIG. 2, a scenario to apply LAA carrier aggregation or dual connectivity as a carrier for downlink communication alone will be discussed with a first example. In this case, a licensed band (LTE) is used for control and data communication and an unlicensed band (LAA) is used in downlink data off-loading alone. That is, in LAA, no uplink data communication takes place.

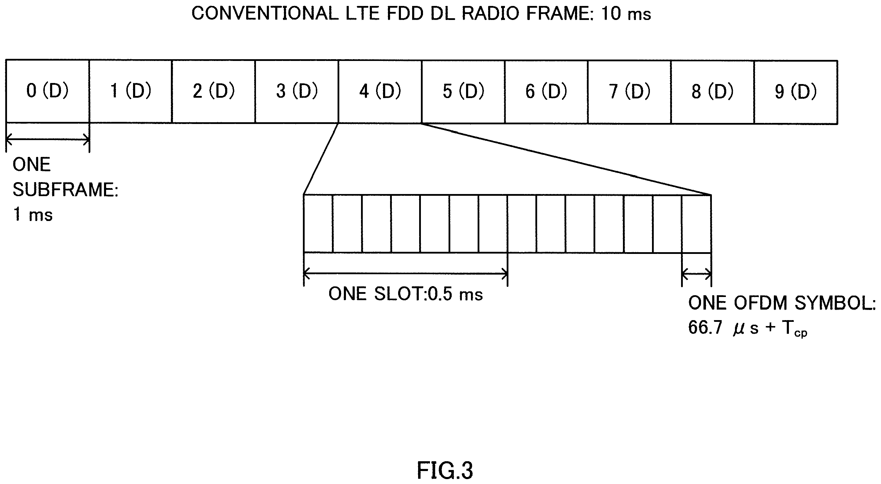

According to the first example, LBT is carried out in base stations alone. Consequently, a user terminal does not use LBT. Unlike LBT in Wi-Fi and so on, the mechanism of LBT in LAA is designed based on conventional frame structures. FIG. 3 shows an FDD downlink radio frame structure in conventional LTE. The radio frame has a cycle of 10 [ms], and the length of one subframe is 1 [ms]. One subframe can be divided into two slots, where the length of one slot is 0.5 [ms]. Also, one subframe is comprised of fourteen OFDM symbols.

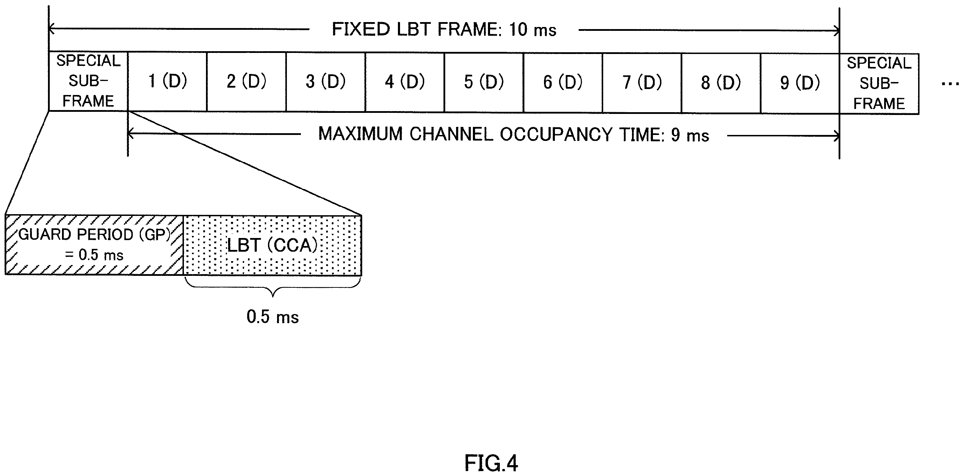

FIG. 4 is a diagram to show an LBT frame structure. The length of a fixed LBT frame is 10 [ms], including at least one special subframe for LBT. Note that this special subframe for LBT is different from the special subframes in existing TDD UL-DL configurations, and is one that is defined new.

As shown in FIG. 4, the LBT special subframe in the LBT frame structure includes a guard period of 0.5 [ms], which serves as a switching point between DL and UL, and the remaining 0.5 [ms] serves as an LBT period. In the LBT period, a base station carries out listening for detecting and determining whether a channel is in the busy state or in the idle state.

When the received signal intensity in the LBT period is higher than a predetermined threshold, the channel is judged to be in the busy state (LBT_{busy}). In this case, the base station waits until the next LBT special subframe, in order to execute LBT again, without transmitting DL data.

When the received signal intensity in the LBT period is lower than the predetermined threshold, the channel is judged to be in the idle state (LBT_{idle}). In this case, the base station can transmit DL data until the next LBT special subframe to execute LBT again.

As shown in FIG. 4, a fixed LBT frame is comprised of nine DL subframes and one special subframe. That is, in a fixed LBT frame of 10 [ms], the maximum channel occupancy time in which downlink communication is possible is 9 [ms].

The length of a fixed LBT frame may have a length of time other than 10 [ms]. For example, when the length of a fixed LBT frame is 5 [ms], the maximum channel occupancy time in which downlink communication is possible is 4 [ms]. That is, in this case, the LBT frame is half the conventional radio frame cycle, and is comprised of four DL subframes and one special subframe.

When the fixed LBT frame is comparatively short, and, for example, 5 [ms], equality can be secured better. When the fixed LBT frame is comparatively long, and, for example, 10 [ms], and continuous transmission time can be secured, so that it better performance and less sensing overhead can be achieved.

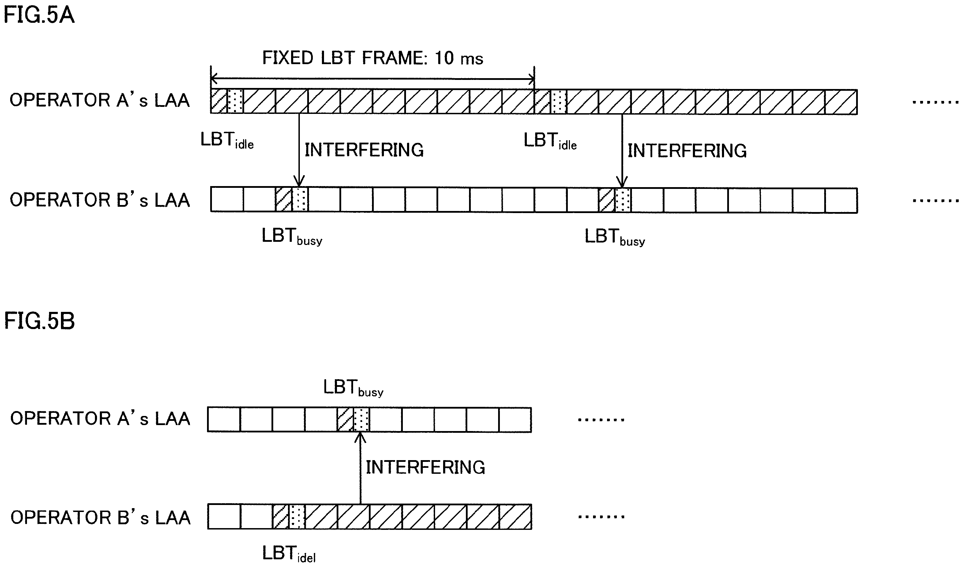

In order to guarantee equality among multiple LAA systems, the LBT period needs to be changed semi-statically. In the example shown in FIG. 5, operators A and B perform LAA. In the first fixed LBT frame shown in FIG. 5A, operator A's LBT period is provided in the top subframe. Meanwhile, operator B's LBT period is provided in the third subframe. In this case, operator A's LBT detection result is LBT_{idle}, so that DL data can be transmitted from the second subframe onward. Operator B's LBT detection result is LBT_{busy} because operator A is transmitting DL data, and therefore DL data cannot be transmitted.

In the following fixed LBT frame shown in FIG. 5A, operator A's LBT period is provided in the top subframe, and operator B's LBT period is provided in the third subframe. Consequently, operator B cannot transmit DL data in this cycle either.

In this way, equality is lost unless the LBT period is changed among a plurality of operators. Consequently, the operators need to change the LBT period semi-statically.

In the example shown in FIG. 5B, operator A's LBT period is changed from that of the example shown in FIG. 5A. In the fixed LBT frame shown in FIG. 5B, operator A's LBT period is provided in the fifth subframe. On the other hand, operator B's LBT period is provided in the third subframe. In this case, operator B's LBT detection result is LBT_{idle}, so that DL data can be transmitted from the fourth subframe onward.

After a specific period is over, each operator (PLMN) selects a random value from a specific range in order to change the location of the LBT subframe. The LBT cycle and the offset may be changed by way of random functions, or may be changed based on patterns that are determined by functions that use the operator indicators and/or cell indicators as parameters. Also, the LBT cycle and the offset may be changed in arbitrary timings, per operator or per base station, or may be changed only in predetermined timings.

Also, during a period of time that is substantially long in comparison with the frame timing -- that is, the cycle of changing the location of the LBT subframe in each LBT frame -- the frame timing may be fixed with respect to absolute time. For example, in the event the LBT frame is 10 [ms], the top subframe of the LBT frame is provided every 10 [ms], over a substantially long period of time. Assume that the top subframe timing is provided every 10 [ms], regardless of the result of LBT, whether or not there is transmission, and so on. By doing so, the subframe transmission timing can be coordinated (synchronized) between the unlicensed band and the licensed band that is engaged in carrier aggregation, so that it is possible to provide a wide band, efficiently, by way of carrier aggregation.

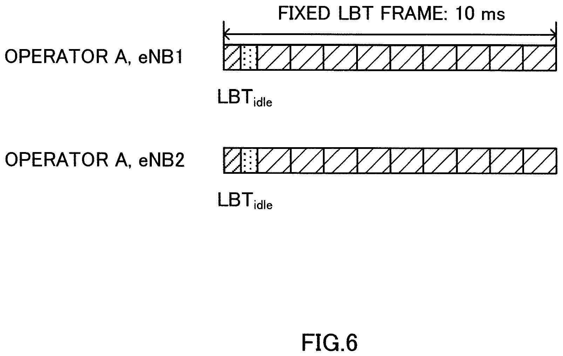

In order to improve the performance of LAA by the same operator, the frame timing (that is, the top timing in each transmission frame) is preferably synchronized within the operator. In the example shown in FIG. 6, base stations eNB1 and eNB2 carry out LAA under the same operator A. In this case, as shown in FIG. 6, it is preferable to synchronize the subframe location where the LBT period is provided. By so doing, the same operator's base stations can detect each other by way of LBT, so that the possibility of losing the opportunities of transmission can be reduced.

In this case, base stations under the same operator carry out transmission without detecting one another. However, if the operator is the same, it is possible to use inter-cell interference cancelation (ICIC: Inter-Cell Interference Coordination) after LBT, so that it is possible to reduce or avoid the deterioration of quality due to interference. Also, if the operator is the same, the network operator can learn information about cells that can cause interference in the stage of deploying base stations and cell planning, so that it is possible to report information about cells that may cause interference to user terminals, and use interference cancelation on the user terminal end. Interference cancelation by user terminals such as this is also referred to as "NAICS" (Network Assisted Interference Cancellation System). However, even within an operator, it is not always the case that sufficient cell planning is possible. If cell planning shows a poor state, cases may be assumed where even base stations under the same operator are asynchronous.

When the frame transmission timing is synchronized between base stations, it is possible to report the cycle and/or changes of the timing of the LBT subframe via the backhaul signaling between the base stations. By this means, it is possible to synchronize the LBT timing within an operator. The base station may report whether or not the LBT subframe is present, its timing and so on, to user terminals. This allows the user terminals to know that there is no DL data communication in LBT subframes, so that the user terminals can reduce unnecessary decoding processes and reduce the power consumption.

If the frame transmission timing is not synchronized between base stations, it is not possible to synchronize the LBT timings within an operator, even by reporting only the cycle and/or changes of the timing of the LBT subframe via the backhaul signaling between the base stations. In this case, the base stations additionally need to synchronize the frame transmission timing with each other. Possible methods of achieving this include the method of providing a GPS receiver in every base station and configuring common transmission timings with respect to time, the method of establishing synchronization by connecting between base stations via a backhaul channel for dedicated use for time synchronization (IEEE 1588), the method of receiving a signal transmitted from a specific base station in another base station and detecting its transmission timing to establish synchronization, and the method of allowing a user terminal to detect differences among multiple base stations' transmission timings and reporting these to the base stations.

By applying the LBT mechanism of the first example, it is possible to change the timing of the LBT subframe in LAA between operators and so on, so that it is possible to guarantee equality among a plurality of operators and so on. Also, within the same operator, it is possible to provide LBT subframes in synchronized timings and apply interference control, so that it is possible to avoid losing transmission opportunities significantly, and improve the performance of LAA. Furthermore, the LBT mechanism according to the first example has an advantage of using a simple method.

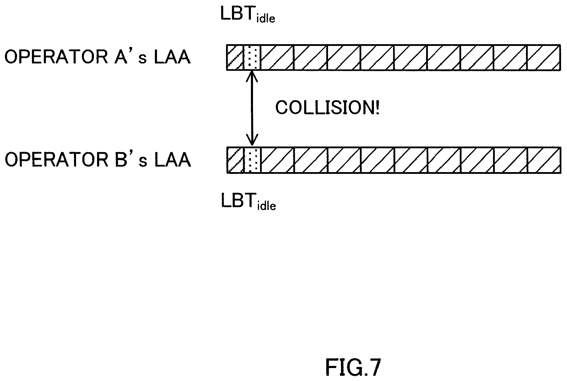

Meanwhile, according to the LBT mechanism of the first example, when two LAA operators provide their LBT periods in the same subframe, neither one can detect the other one's transmissions, and LBT might lose its effectiveness (see FIG. 7). For example, when the fixed LBT frame is comprised of ten subframes (that is, when the LBT frame is 10 [ms] long), collisions might occur at a rate of 10%.

Variations of the LBT frame structure according to the first example will be described below.

### <Variation 1>

The GP/LBT periods in the special subframe for LBT are not limited to 0.5 [ms], and may be adjusted depending on the required conditions. For example, a base station that can switch between transmission and reception quickly can improve the reliability of LBT-based detection by configuring the GP period short and making the LBT period long, and reduce the possibility of interfering with LAA, Wi-Fi and so on. Also, by changing the length of the LBT period randomly or in a regular cycle, even when the LBT special subframes match between LAA operators as shown in FIG. 7, the length of the LBT period varies between them, which enables detection, and therefore it is still possible to improve the effectiveness of LBT-based interference control.

### <Variation 2>

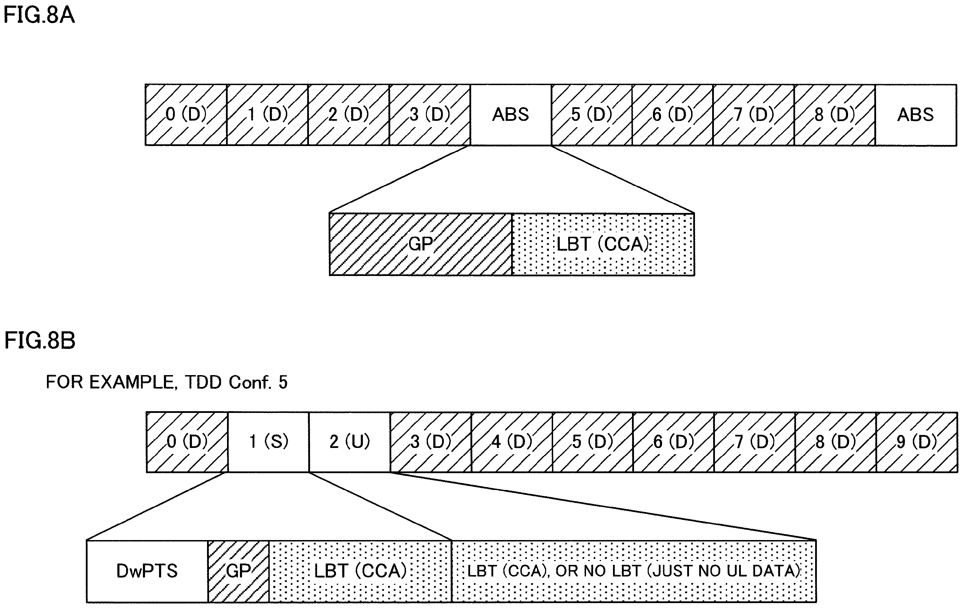

The LBT subframe is not limited to the structure of being comprised entirely of DL subframes as shown in FIG. 3, and can be employed in other structures as well. For example, as shown in FIG. 8A, when an ABS (Almost Blank Subframe) pattern is formed, an ABS can be configured as an LBT subframe. In the example shown in FIG. 8A, a guard period and an LBT period are formed in an ABS. In an ABS subframe, a user terminal does not measure the quality of cells (measurement). Consequently, when an ABS subframe is used as an LBT subframe, it is possible to reduce the impact upon the measurement of cell quality by user terminals. Also, in order not to measure the quality of cells in ABS subframes, there is already signaling for limiting the measurement subframes. LBT subframes can be reported to user terminals, implicitly, through this existing signaling, so that it is possible to achieve an advantage of being able to configure LBT subframes without even providing new signaling.

Also, when a TDD configuration is used to support LAA, which allows only downlink communication, and UL subframes are not used in uplink communication, special subframes or UL subframes of TDD configurations can be used in LBT. In the examples shown in FIG. 8B, TDD UL-DL configurations #5 is employed, and a DL pilot time slot (DwPTS), a guard period and an LBT period are formed in the special subframe of a TDD configuration. In the UL subframe, either an LBT period may be formed, or an LBT period needs not be formed. However, UL data is not transmitted in this UL subframe.

The GP period, the UpPTS period and the UL subframe period in the special subframe of a TDD configuration are non-transmission periods, unless user terminals are commanded to carry out transmission. As noted earlier, according to the first example, there is no transmission from user terminals in the unlicensed band. Consequently, by using these non-transmission periods for LBT, it is possible to execute LBT without producing additional overhead. Also, user terminals have only to communicate in accordance with existing TDD configurations, so that it is possible to achieve LBT without introducing additional special mechanisms. Furthermore, in these periods, user terminals do not perform receiving operations either, so that it is possible to make the impact upon user terminals' receiving operations that is caused when LBT is executed zero.

### (User Terminal Operations)

When there is no explicit RRC signaling to show an LBT radio frame pattern from a base station to a user terminal, the user terminal keeps operating. However, it is still preferable to configure/optimize the DRX configuration taking into account the LBT frame pattern, in order to save power more in user terminals, and to understand the receiving time in user terminals on a shared basis.

### (Second Example)

With a second example, in order to reduce the possibility of collisions in LBT, channel reservation, which is an enhanced version of the LBT mechanism shown with the first example, will be discussed.

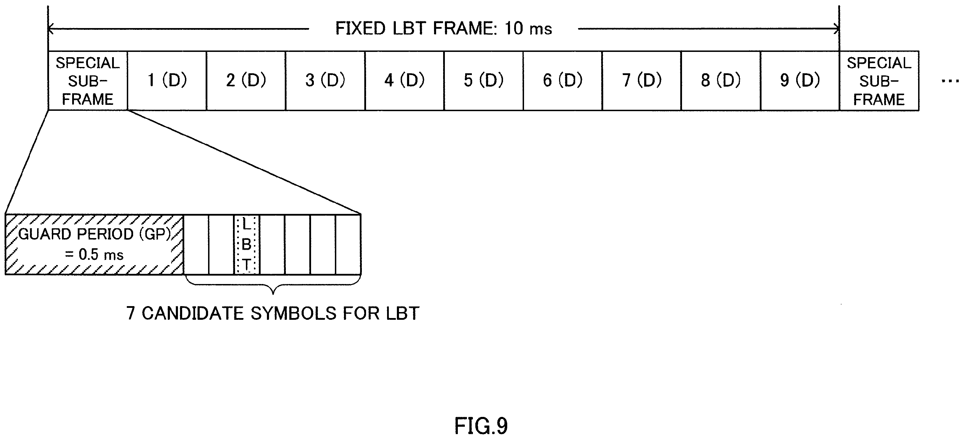

According to the second example, the granularity of LBT (that is, the minimum time length unit) is one OFDM symbol in one special subframe. For example, in an LBT special subframe of 1 [ms], 0.5 [ms] is used as a guard period, and the remaining 0.5 [ms] is used for LBT and channel reservation. In this case, as shown in FIG. 9, the remaining 0.5 [ms] includes seven symbols, which are candidates to execute LBT. Among these seven candidate symbols, it is possible to select one symbol for LBT, and, furthermore, in the event of LBT_{idle}, it is possible to use a beacon reference signal (BRS) for channel reservation. Each base station selects the symbol to execute LBT from the seven candidate symbols, randomly, with equal probability.

Although an example is shown in FIG. 9 in which the fixed LBT frame is formed to be 10 [ms], this structure is by no means limiting, and the fixed LBT frame may be formed to be a comparatively short time, such as 5 [ms]. Given that the amount of data that can be transmitted in one transmission opportunity increases in proportion to the length of the fixed LBT frame, although it is possible to reduce the overhead due to LBT and improve user terminal throughput, the length of idle time when losing a transmission opportunity becomes longer too. On the other hand, although the overhead due to LBT increases in reverse proportion to the length of the fixed LBT frame, it is still possible to shorten the length of idle time, and lower the probability of not using the channel.

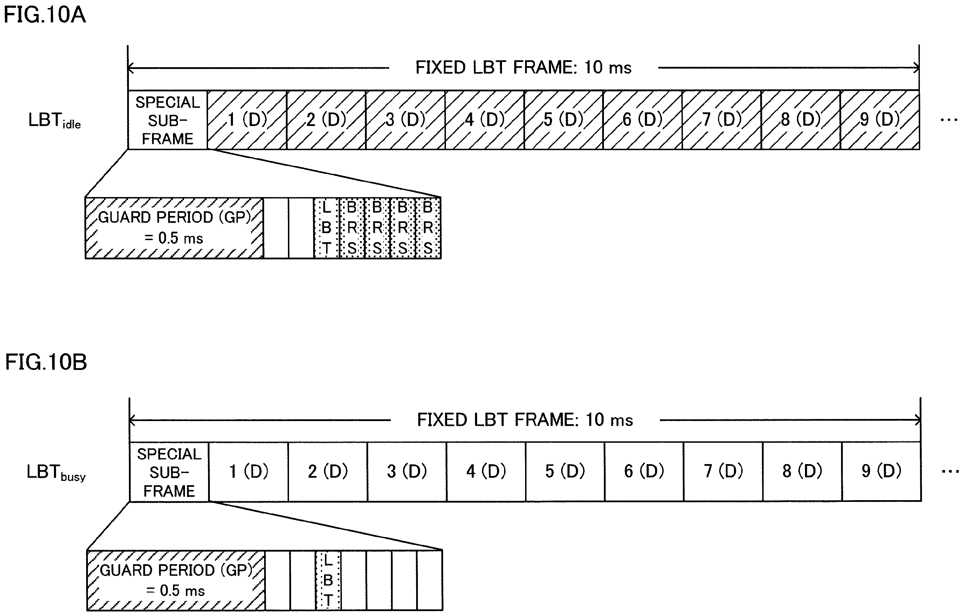

As shown in FIG. 10A, when a channel is judged to show LBT_{idle}, the BRS is transmitted in occupied CCs following the LBT symbol. This indicates that the channel is occupied for DL data communication until the next special subframe for LBT. The BRS occupies the whole bandwidth and only one OFDM symbol. When a plurality of OFDM symbols remain following the LBT symbol, the BRS repeats being transmitted in these symbols. This structure to transmit the BRS repetitively allows the use of a common BRS regardless of the location of the LBT symbols, so that it is possible to simplify the base band circuit structure in the base station.

Note that the BRS, instead of being configured to be transmitted repetitively, may be a reference signal that is provided based on the number of OFDM symbols that remain after the LBT symbol. In this case, it becomes necessary to transmit and detect varying BRSs that each suit the location of the LBT symbol, so that the circuit structure of base stations becomes complex. However, when the LBT symbol shows up early and the number of BRS-OFDM symbols is large, longer BRS symbols are transmitted, so that it is possible to improve the reliability of LBT-based detection, and execute better interference control.

As shown in FIG. 10, when a channel is judged to show LBT_{busy}, no BRS is transmitted.

The BRS is comprised of cell-specific reference signals. Conventional reference signals may be seen as BRS candidates. In addition to base stations, user terminals may be able to detect the BRS as well. When a user terminal can detect the BRS in an LBT subframe, the user terminal can know whether or not data transmission can take place in DL subframes that follow, based on whether or not the BRS from the base station where the user terminal is connected is detected. When the BRS is not detected, data cannot be transmitted in DL subframes that follow, so that the user terminal can stop the DL receiving operation and save the power consumption. When the BRS is detected, data may be transmitted in subsequent DL subframes, so that the user terminal tries to operate to decode and demodulate the downlink control signals and/or data signals in each DL subframe.

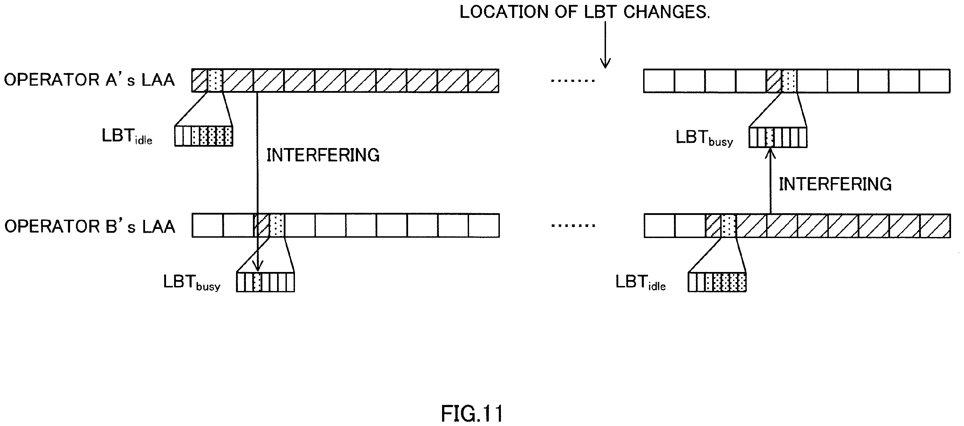

As in the first example, with the second example, too, the LBT period needs to be changed semi-statically in order to guarantee equality among multiple LA systems. The example shown in FIG. 11 corresponds to the example of the first example shown in FIG. 5.

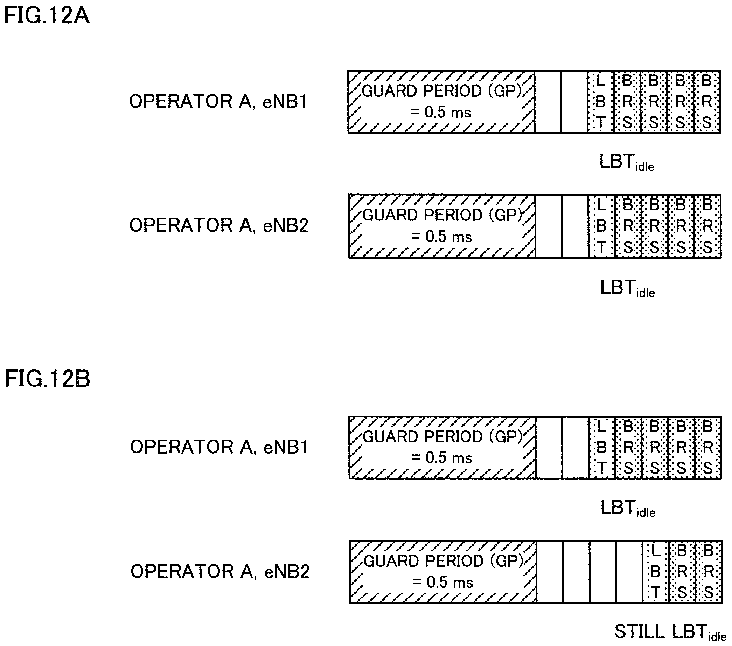

As in the first example, with the second example, too, LBT periods are preferably provided synchronously within an operator, in order to improve the performance of LAA by the same operator. In the example shown in FIG. 12A, the LBT special subframes and the LBT symbols of base station eNB1 and base station eNB2 under operator A match each other. That is, LBT periods are provided synchronously within the operator.

In the example shown in FIG. 12B, the LBT special subframes of base stations eNB1 and base station eNB2 under operator A match each other, but the LBT symbols do not match each other. In this case, the base stations discard the detection results of the BRSs transmitted from other base stations under the same operator, and carry out LBT for other operators and other radio systems. In the example shown in FIG. 12B, base station eNB2 executes LBT, and identifies the BRS from base station eNB1, which belongs to the same operator. Base station eNB2 can discard the BRSs from the base stations under the same operator received in the LBT period, and judge that the channel is still in the idle state. This mechanism can be made possible by reporting the sequences and code sequences of the BRSs transmitted from the base stations under the same operator between the base stations.

By applying the LBT mechanism of the second example, it is possible to make the sensing period short by way of channel reservation. Channel reservation can be made possible by using the BRS, and the possibility of collisions can be reduced to 1.4% by way of channel reservation.

Variations of the LBT frame structure of the second example will be described below.

### <Variation 1>

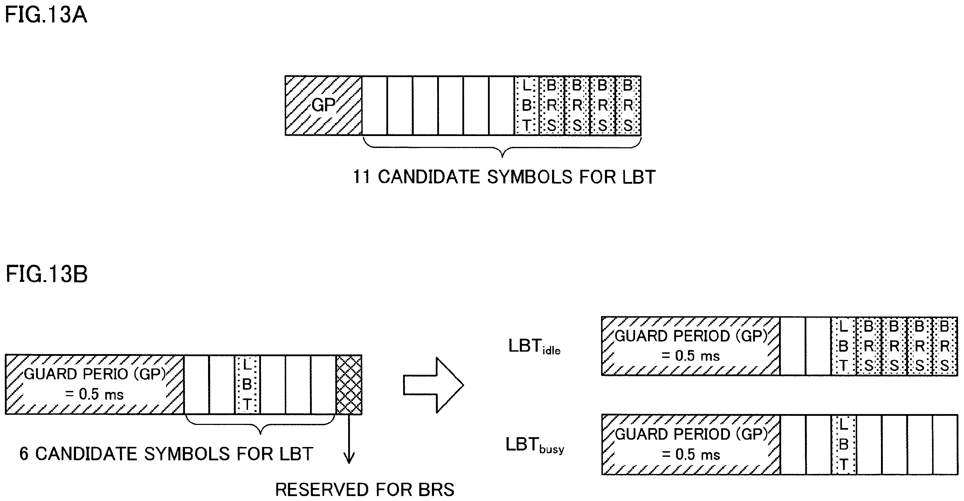

The guard period in the LBT special subframe is not limited to 0.5 [ms], and may be adjusted depending on the conditions that are required. For example, as shown in FIG. 13A, it is possible to shorten the guard period and increase the number of candidate symbols for LBT. In the example shown in FIG. 13A, one LBT special subframe contains eleven candidate symbols.

### <Variation 2>

The LBT subframe is not limited to a structure formed entirely with DL subframes, and can be employed in other structures, such as, for example, an ABS pattern, a TDD configuration without UL data, and so on.

### <Variation 3>

As shown in FIG. 13B, it is possible not to carry out LBT in the last symbol in a newly defined LBT special subframe. In this case, in the last OFDM symbol, the BRS is transmitted when the LBT result indicates the idle state, and no transmission is carried out when the LBT result indicates the busy state. When LBT is executed in the last symbol, the BRS cannot be transmitted even in the event of LBT_{idle}, base station, even when granted an opportunity for transmission, is unable to report this to nearby base stations. On the other hand, when LBT is performed in symbols other than the last symbol, the BRS is transmitted if LBT_{idle} is indicated, so that different operations are carried out between when LBT is set up in the last symbol and when LBT is set up in other symbols. By contrast with this, if the symbol in the LBT special subframe is reserved for the BRS, the same operation can be assumed in all cases, so that it is possible to achieve an advantage of controlling interference by means of the BRS.

In the example shown in FIG. 13B, the last symbol in the LBT special subframe is reserved for the BRS, and the remaining six symbols are LBT candidate symbols. When the LBT period is provided in the third symbol, the BRS repeats being transmitted in symbols that follow in the event of LBT_{idle,} or the BRS is not transmitted in the event of LBT_{busy}. This operation is carried out whenever a given OFDM symbol is selected as the LBT symbol.

### (Third Example)

With a third example, a scenario to apply TDD LAA to carrier aggregation or dual connectivity as in scenarios 1B and 2B shown in FIG. 2 will be discussed. In this case, the licensed band (LTE) is primarily used for control and data communication, and the unlicensed band (LAA) is primarily used for downlink data and uplink data off-loading.

According to the third example, a base station performs downlink LBT. A user terminal performs uplink LBT.

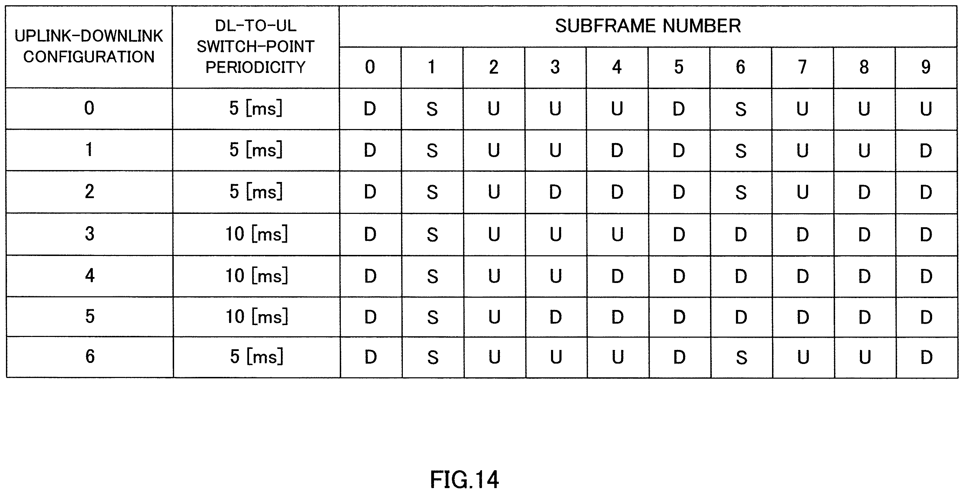

As shown in FIG. 14, in TDD, UL-DL configurations #0 to #6, which are seven varying frame structures having different transmission ratios between UL subframes and DL subframes, are provided as UL-DL configurations.

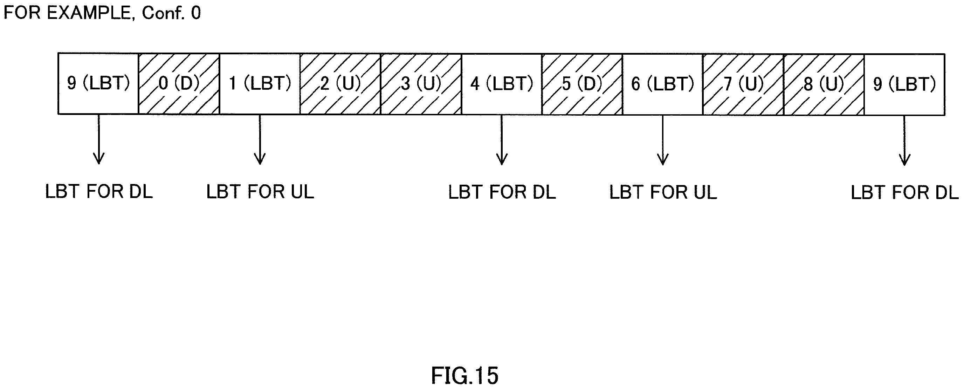

FIG. 15 is a diagram to explain LBT, in the event an LTE TDD radio frame of existing TDD UL-DL configuration #0 is used. The existing LTE TDD radio frame is formed to be 10 [ms]. In this case, LBT is executed before every DL and UL communication. In the example shown in FIG. 15, before DL communication takes place in subframe #0 and 5, the base stations perform DL LBT. Before UL communication takes place in subframes #2 and 3 and subframes #7 and 8, a user terminal performs UL LBT.

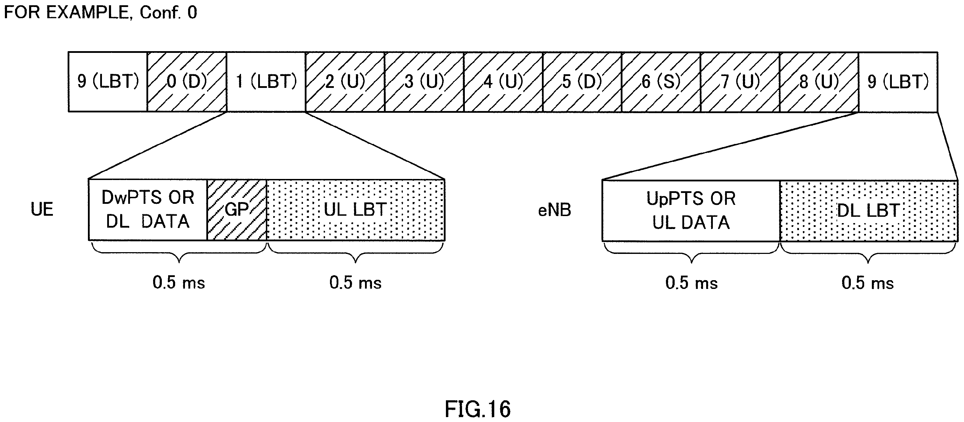

Performing LBT before every DL/UL communication leads to increased sensing overhead. So, within a radio frame, it is possible to reduce the sensing overhead by executing DL LBT and UL LBT once each as shown in FIG. 16.

In the example shown in FIG. 16, before DL communication takes place in subframe #0, a base station eNB performs DL LBT in subframe #9. In this LBT subframe, 0.5 [ms] is formed with a UL pilot time slot (UpPTS: Uplink Pilot Time Slot) or UL data, and the remaining 0.5 [ms] is formed with a DL LBT period. The result of this LBT is effective for the rest of the DL subframes in this radio frame (including, for example, subframe #5). That is, if the LBT result in this subframe indicates the idle state, it is possible to judge that transmission is possible in the remaining DL subframes. On the other hand, if the LBT result in this subframe indicates the busy state, it is possible to judge that transmission is not possible in the remaining DL subframes.

In the example shown in FIG. 16, before UL communication takes place in subframe #2, a user terminal UE performs UL LBT in subframe #1. In this LBT subframe, 0.5 [ms] is formed with a guard period and a DL pilot time slot or DL data, and the remaining 0.5 [ms] is formed with a UL LBT period. The result of this LBT is effective for the rest of the UL subframes in this radio frame (including, for example, subframe #7). That is, if the LBT result in this subframe indicates the idle state, it is possible to judge that transmission is possible in the remaining DL subframes. On the other hand, if the LBT result in this subframe indicates the busy state, it is possible to judge that transmission is not possible in the remaining DL subframes.

Although a frame structure such as this can lead to reduced sensing overhead, it is not possible to perform LBT shortly before DL communication and UL communication take place, so that subframes after the switching point yields inaccurate LBT results. This poses a threat of leading to a deterioration of the reliability of LBT-based interference detection and a deterioration of performance in other radio systems such as LAA, Wi-Fi and so on.

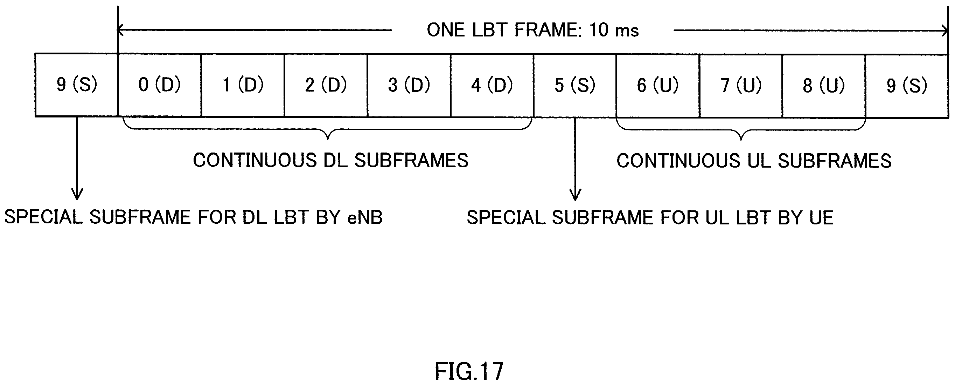

So, as shown in FIG. 17, it is possible to provide a structure in which a TDD LBT radio frame contains continuous DL/UL subframes. In other words, by making arrangements so that UL transmission and DL transmission are each carried out in a continuous manner, and UL and DL are switched only once in a radio frame, it is possible to minimize the number of times to perform LBT. According to this structure, DL/UL LBT is performed once for DL/UL subframes that are provided in a continuous manner, and it is still possible to mirror accurate LBT results in DL/UL subframes within a radio frame. Note that the ratio of DL/UL subframes in a TDD LBT radio frame may vary.

In such a TDD LBT radio frame, an LBT special subframe for executing DL LBT by a base station is provided before the first DL subframe (in FIG. 17, subframe #0). As noted earlier, this LBT special subframe is one that is defined anew, unlike special subframes in existing TDD UL-DL configurations. Similarly, an LBT special subframe for executing UL LBT by a user terminal is provided before the first UL subframe (in FIG. 17, subframe #6). A guard period is required at the point to switch from DL to UL.

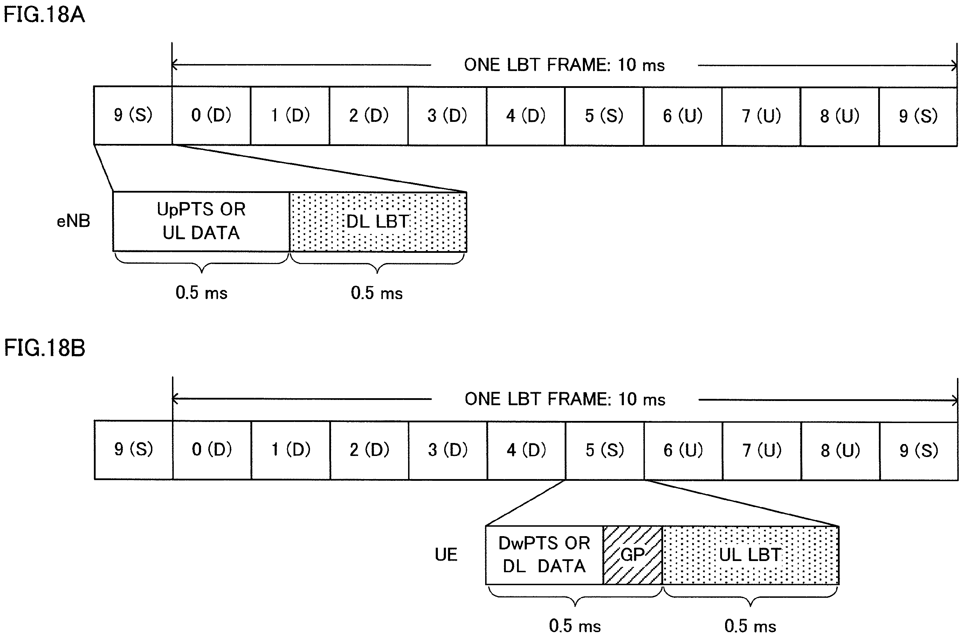

FIGs. 18 provide diagrams to show the configurations of LBT special subframes #5 and 9 in FIG. 17. As shown in FIG. 18A, before the first DL subframe (subframe #0) in a given LBT frame, an LBT special subframe (subframe #9) for executing DL LBT by a base station eNB is provided. In this LBT special subframe, 0.5 [ms] is formed with a UL pilot time slot or UL data, and the remaining 0.5 [ms] is formed with a DL LBT period. The result of this LBT is effective over continuous DL subframes (subframes #0 to #4).

As shown in FIG. 18B, before the first UL subframe (subframe #6) in a given LBT frame, an LBT special subframe (subframe #5) for executing UL LBT by a user terminal UE is provided. In this LBT special subframe, 0.5 [ms] is formed with a DL pilot time slot or DL data, and the remaining 0.5 [ms] is formed with a UL LBT period. The result of this LBT is effective over continuous UL subframes (subframes #6 to #8).

Note that the locations of the DL/UL subframes in the radio frame and the place of the DL/UL LBT subframe are reported from the base station to the user terminal. These may be reported via UE-specific higher layer signaling, or may be reported via cell-specific broadcast information. The user terminal operates to detect the signals for the subject terminal in DL subframes. If there is a request for transmission from the base station or a higher layer, the user terminal performs LBT in the UL LBT subframe, and, if the result of LBT indicates the idle state, the user terminal carries out transmission in a predetermined UL subframe or UpPTS.

Variations of the LBT frame structure of the third example will be described below.

### <Variation 1>

In the LBT special subframe that is defined anew, the guard period, the DL LBT period and the UL LBT period need not be fixed. That is, the DL LBT period and the UL LBT period are not limited to 0.5 [ms].

### <Variation 2>

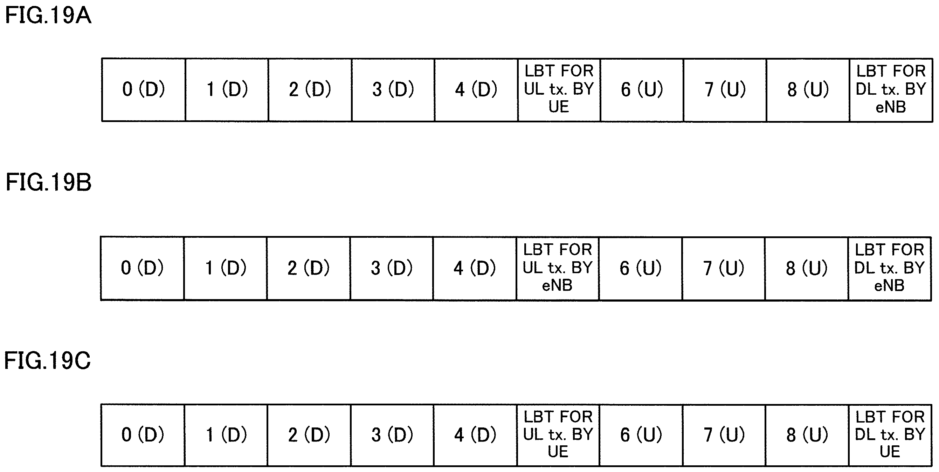

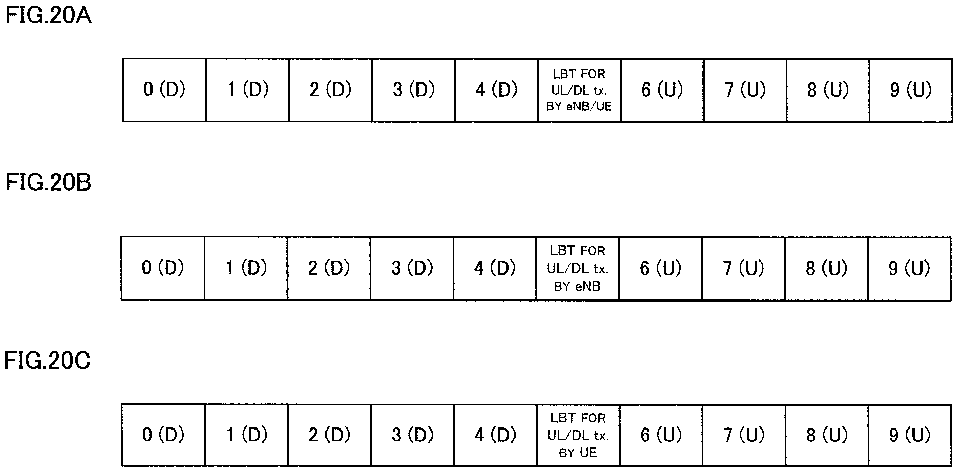

In the event of TDD LAA, a base station performs DL LBT in a given subframe for DL communication, and a user terminal performs UL LBT in another subframe for UL communication. This may be changed as shown in FIGs. 19 and FIGs. 20.

In the examples shown in FIGs. 19, LBT is carried for DL communication and for UL communication, in two different LBT special subframes. The example shown in FIG. 19A is the same as the example shown in FIG. 17. That is, the base station eNB performs DL LBT in subframe #9, which is an LBT special subframe, and the user terminal UE performs UL LBT in subframe #5, which is an LBT special subframe.

In the example shown in FIG. 19B, the base station eNB performs LBT for both DL communication and UL communication. That is, the base station eNB performs DL LBT in subframe #9, which is an LBT special subframe, and the base station eNB also performs UL LBT in subframe #5, which is an LBT special subframe. By doing so, it is not necessary to provide the user terminal UE with LBT functions, so that it is possible to simplify the circuit structure in the user terminal UE. The base station eNB has only to carry out the same operation as in LBT, which is implemented in order to carry out DL transmission, in the UL LBT subframe, so that this does not lead to making the base station apparatus complex.

In the example, shown in FIG. 19C, the user terminal UE performs LBT for both DL communication and UL communication. That is, the user terminal UE performs DL LBT in subframe #9, which is an LBT special subframe, and the user terminal UE also performs UL LBT in subframe #5, which is an LBT special subframe. The user terminal UE may report the results of these LBTs to the base station eNB. In order to send this report, the user terminal UE is capable of communicating using a licensed band.

In the examples shown in FIG. 20, LBT for both DL communication and UL communication is performed in only one LBT special subframe. In the example shown in FIG. 20A, the base station eNB and the user terminal UE perform both DL and UL LBTs. That is, the base station eNB and the user terminal UE perform DL/UL LBTs in subframe #5, which is an LBT special subframe.

In the example shown in FIG. 20B, the base station eNB performs both DL and UL LBTs. That is, the base station eNB performs DL/UL LBT in subframe #5, which is an LBT special subframe. By doing so, it is not necessary to provide the user terminal UE with LBT functions, so that it is possible to simplify the circuit structure in the user terminal UE. The base station eNB has only to carry out the same operation as in LBT, which is implemented in order to carry out DL transmission, in the UL LBT subframe, so that this does not lead to making the base station apparatus complex.

In the example shown in FIG. 20C, the user terminal UE performs LBT for both DL and UL. That is, the user terminal UE performs DL/UL LBT in subframe #5, which is an LBT special subframe. The user terminal UE may report the results of LBT to the base station eNB. In order to send this report, the user terminal UE is capable of communicating using a licensed band.

As shown in FIG. 19B and FIG. 20B, when the user terminal is not involved in LBT, the user terminal keeps operating unless there is an explicit signal to indicate an LBT frame pattern.

As shown in FIG. 19A, FIG. 19C, FIG. 20A and FIG. 20C, when the user terminal is involved in LBT, an LBT radio frame pattern, which includes DL/UL configurations information, is signaled to the user terminal, in order to indicate the DL/UL period and the transmission period. The user terminal follows the indicated pattern in order to execute UL LBT or DL/UL LBT.

In the examples shown in FIG. 19A and FIG. 20A, the user terminal performs UL LBT. When this UL LBT yields the detection result LBT_{idle}, the user terminal starts UL data communication. When the detection result LBT_{busy} is yielded, the user terminal does not start UL data communication. Note that an environment is assumed here in which the user terminal can communicate in a licensed band, in addition to an unlicensed band, by means of carrier aggregation or dual connectivity. In this case, the user terminal may continue communicating in the licensed band regardless of the result of LBT. By this means, it is possible to minimize the deterioration of user terminal throughput caused by LBT results.

### (Fourth Example)

With a fourth example, channel reservation to enhance the LBT mechanism shown with the third example in order to reduce the possibility of collisions in LBT, will be discussed.

According to the fourth example, the granularity of LBT (that is, the minimum time length unit) is one OFDM symbol in one special subframe. Existing TDD configurations are used for the frame structure, and, in the event of LBT_{idle}, the BRS is used for channel reservation as in the second example. For the BRS, a DL BRS is used when the DL channel indicates LBT_{idle}, and a UL BRS is used when the UL channel indicates LBT_{idle}.

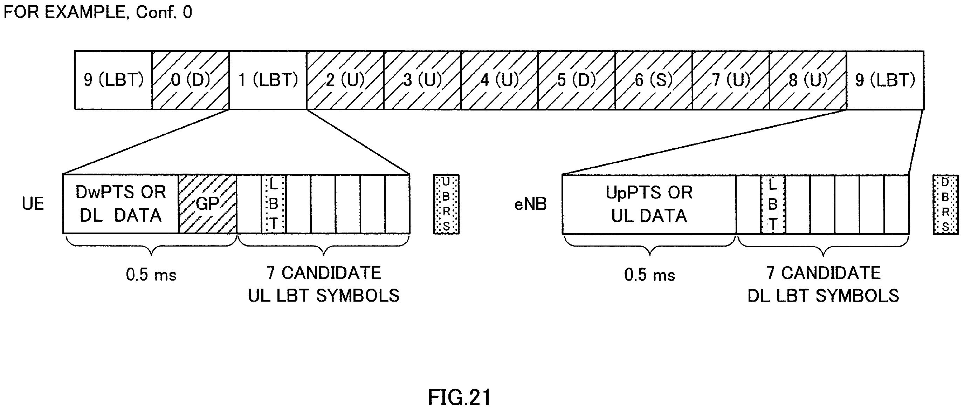

FIG. 21 is a diagram to explain LBT in the event an LTE TDD radio frame of existing TDD UL-DL configurations #0 is used. The existing LTE TDD radio frame is formed to be 10 [ms]. In the example shown in FIG. 21, LBT is performed for both DL and UL before the first DL/UL communication in the radio frame. Also, DL/UL BRSs are used for DL/UL channel reservation.

In the example shown in FIG. 21, before DL communication takes place in subframe #0, a base station eNB performs DL LBT in subframe #9. In this LBT subframe, 0.5 [ms] is formed with a UL pilot time slot or UL data, and the remaining 0.5 [ms] is formed with seven candidate symbols for DL LBT. The result of this LBT is effective for the rest of the DL subframes in this radio frame (including, for example, subframe #5). That is, if the LBT result in this subframe indicates the idle state, it is possible to judge that transmission is possible in the remaining DL subframes. On the other hand, if the LBT result in this subframe indicates the busy state, it is possible to judge that transmission is not possible in the remaining DL subframes.

In the example shown in FIG. 21, before UL communication takes place in subframe #2, a user terminal UE performs UL LBT in subframe #1. In this LBT subframe, 0.5 [ms] is formed with a DL pilot time slot or DL data, and the remaining 0.5 [ms] is formed with seven candidate symbols for UL LBT. The result of this LBT is effective for the rest of the UL subframes in this radio frame (including, for example, subframe #7). That is, if the LBT result in this subframe indicates the idle state, it is possible to judge that transmission is possible in the remaining DL subframes. On the other hand, if the LBT result in this subframe indicates the busy state, it is possible to judge that transmission is not possible in the remaining DL subframes.

According to this radio frame structure, LBT has to be performed only once for DL and UL each, so that the sensing overhead can be reduced. However, since it is not possible to perform LBT shortly before DL communication and UL communication take place, subframes after the switching point yield inaccurate LBT results. This poses a threat of leading to a deterioration of the reliability of LBT-based interference detection and a deterioration of performance in other radio systems such as LAA, Wi-Fi and so on.

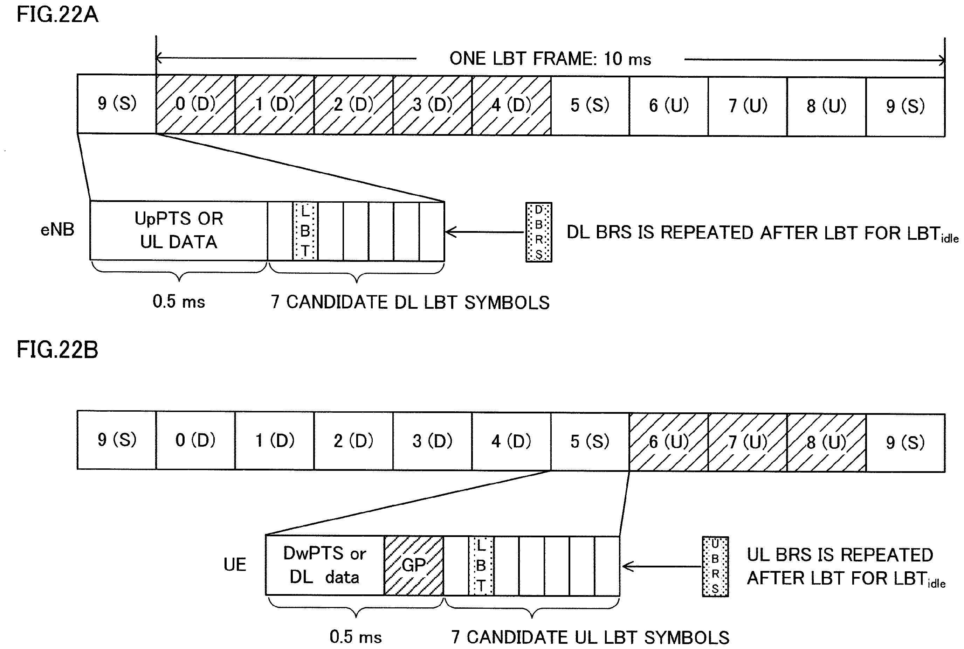

So, as shown in FIG. 22, it is possible to provide a structure in which a TDD LBT radio frame contains continuous DL/UL subframes. In other words, by making arrangements so that UL transmission and DL transmission are each carried out in a continuous manner, and UL and DL are switched only once in a radio frame, it is possible to minimize the number of times to perform LBT. According to this structure, DL/UL LBT is performed once for DL/UL subframes that are provided in a continuous manner, and it is still possible to mirror accurate LBT results in DL/UL subframes within a radio frame. Note that the ratio of DL/UL subframes in a TDD LBT radio frame may vary.

In the LBT frame shown in FIG. 22A, an LBT special subframe for executing DL LBT by a base station eNB is provided before the first DL subframe (in FIG. 22A, subframe #0). This LBT special subframe is one that is defined anew, unlike special subframes in existing TDD UL-DL configurations.

As shown in FIG. 22A, in the LBT special subframe provided to allow the base station eNB to execute DL LBT, 0.5 [ms] is formed with a UL pilot time slot or UL data, and the remaining 0.5 [ms] is formed with seven candidate symbols for DL LBT. The base station eNB selects one symbol from the seven candidate symbols, randomly, with equal probability, and executes DL LBT in the selected symbol.

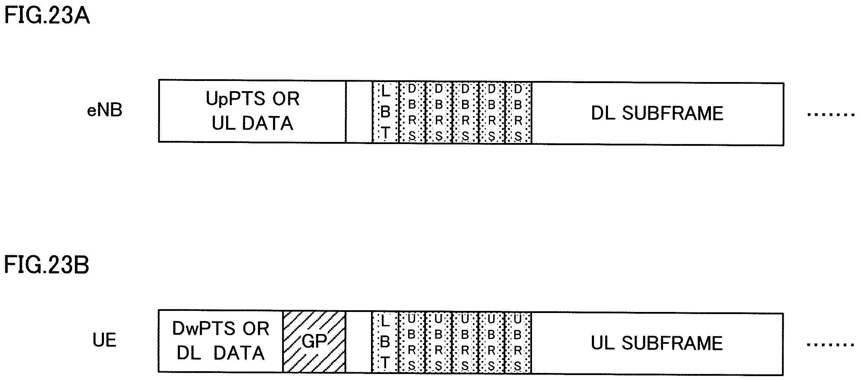

In the event of LBT_{idle}, as shown in FIG. 23A, the DL BRS is transmitted repetitively in symbols following LBT. The DL BRS that is transmitted from the base station eNB shows that the channel is occupied until the next LBT special subframe. This structure to transmit the BRS repetitively allows the use of a common BRS regardless of the location of the LBT symbols, so that it is possible to simplify the base band circuit structure in the base station.

In the LBT frame shown in FIG. 22B, before the first UL subframe (in FIG. 22B, subframe #6), an LBT special subframe for allowing a user terminal UE to perform UL LBT is provided. In this LBT special subframe, 0.5 [ms] is formed with a guard period and a DL pilot time slot or DL data, and the remaining 0.5 [ms] is formed with seven candidate symbols for UL LBT. The user terminal UE selects one symbol from the seven candidate symbols, randomly, with equal probability, and executes UL LBT in the selected symbol.

In the event of LBT_{idle}, as shown in FIG. 23B, the UL BRS is transmitted repetitively in symbols following LBT. The UL BRS that is transmitted from the user terminal UE shows that the channel is occupied until the next LBT special subframe.

By employing the LBT mechanism according to the fourth example, the possibility of collisions can be reduced down to 1.4%. In particular, the structures shown in FIGs. 22 make it possible to reduce the sensing overhead and, furthermore, achieve accurate sensing results. However, the structures shown in FIGs. 22 modify existing TDD frame structures significantly. Nevertheless, the structures shown in FIGs. 22 are by no means limiting, and, in order to apply the LBT mechanism, it is necessary to modify existing frame structures.

Variation of the LBT frame structure of the fourth example will be described below.

### <Variation 1>

In the LBT special subframe that is defined anew, the guard period, the DL LBT period and the UL LBT period need not be fixed. That is, the DL LBT period and the UL LBT period are not limited to 0.5 [ms].

### <Variation 2>

In the event of TDD LAA, a base station performs DL LBT in a given subframe for DL communication, and a user terminal performs UL LBT in another subframe for UL communication, it is possible to modify this, as in the examples of the third embodiment shown in FIGs. 19 and FIGs. 20.

### <Variation 3>

It is possible not to perform LBT in the last symbol of the newly defined LBT special subframe. In this case, in the last OFDM symbol, the BRS is transmitted when the LBT result indicates the idle state, and no transmission is carried out when the LBT result indicates the busy state.

### (Structure of Radio Communication System)

Now, a structure of a radio communication system according to the present embodiment will be described below. In this radio communication system, the above-described radio communication method to perform LBT by using a radio communication system (LAA) to run LTE in an unlicensed band is employed.

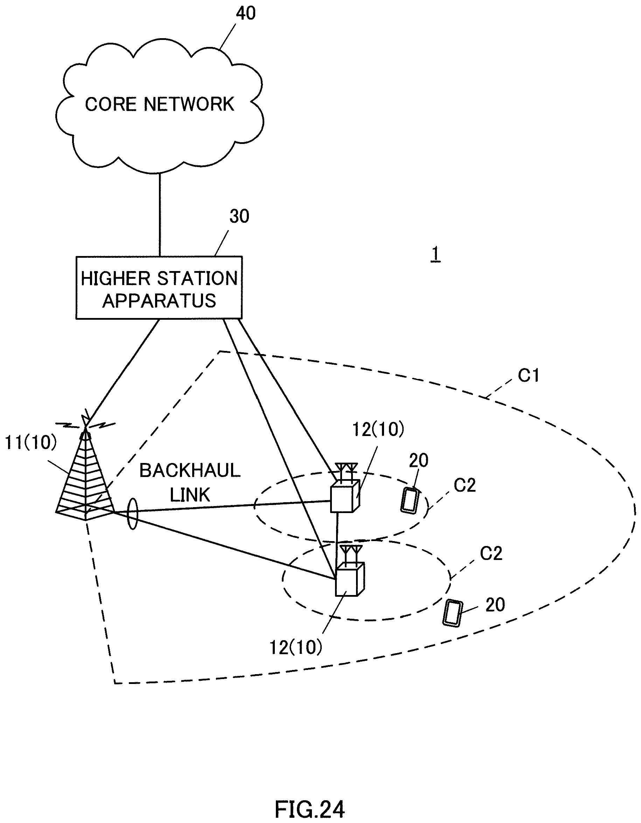

FIG. 24 is a schematic structure diagram to show an example of the radio communication system according to the present embodiment. Note that the radio communication system shown in FIG. 24 is an LTE system, or a system to accommodate, for example, SUPER 3G. This radio communication system can adopt carrier aggregation or dual connectivity to group a plurality of fundamental frequency blocks (component carriers) into one, where the LTE system bandwidth constitutes one unit. Also, the radio communication system shown in FIG. 24 has an unlicensed band (LTE-U base station). Note that this radio communication system may be referred to as "IMT-advanced," or may be referred to as "4G" or "FRA (Future Radio Access)."

The radio communication system 1 shown in FIG. 24 includes a radio base station 11 that forms a macro cell C1, and radio base stations 12 that form small cells C2, which are placed within the macro cell C1 and which are narrower than the macro cell C1. Also, in the macro cell C1 and in each small cell C2, user terminals 20 are placed. For example, mode may be employed here in which the macro cell C1 is used in a licensed band and the small cells C2 are used in an unlicensed band (LAA). Also, mode may be employed here in which part of the smalls cell C2 is used in a licensed band and the other small cells C2 are used in an unlicensed band.

The user terminals 20 can connect with both the radio base station 11 and the radio base stations 12. The user terminals 20 may use the macro cell C1 and the small cells C2, which use different frequencies, at the same time, by way of carrier aggregation or dual connectivity. For example, it is possible to transmit assist information (DL signal structure) pertaining to a radio base station 12 (for example, an LTE-U base station) to use the unlicensed band, from the radio base station 11 to use the licensed band to the user terminals 20. Also, when carrier aggregation is performed in the licensed band and the unlicensed band, it is possible to employ a structure in which one radio base station (for example, the radio base station 11) controls the scheduling of licensed band cells and unlicensed band cells.

Between the user terminals 20 and the radio base station 11, communication is carried out using a carrier of a relatively low frequency band (for example, 2 GHz) and a narrow bandwidth (referred to as, for example, "existing carrier," "legacy carrier" and so on). Meanwhile, between the user terminals 20 and the radio base stations 12, a carrier of a relatively high frequency band (for example, 3.5 GHz, 5 GHz, etc.) and a wide bandwidth may be used, or the same carrier as that used in the radio base station 11 may be used. A structure may be employed here in which the connection between the radio base station 11 and the radio base stations 12, or between the radio base stations 12, is implemented by wire connection (optical fiber, the X2 interface and so on) or by wireless connection.

The radio base stations 10 (radio base stations 11 and 12) are each connected with a higher station apparatus 30, and are connected with a core network 40 via the higher station apparatus 30.

In FIG. 24, the radio base station 11 is a macro base station having a relatively wide coverage, and forms a macro cell C1. A radio base station 12 is a small base station having a local coverage, and forms a small cell C2. Note that the number of radio base station 11 and 12 is not limited to that shown in FIG. 24.

In the macro cell C1 and the small cells C2, the same frequency band may be used, or different frequency bands may be used. Also, the radio base stations 11 and 12 are connected with each other via an inter-base station interface (for example, optical fiber, the X2 interface, etc.).

The user terminals 20 are terminals to support various communication schemes such as LTE, LTE-A and so on, and may include both mobile communication terminals and stationary communication terminals. A user terminal 20 can carry out communication with other user terminals 20 via radio base stations 10.

Note that the higher station apparatus 30 may be, for example, an access gateway apparatus, a radio network controller (RNC), a mobility management entity (MME) and so on, but is by no means limited to these.

Also, in the radio communication system 1, a downlink shared channel (PDSCH: Physical Downlink Shared Channel), which is used by each user terminal 20 on a shared basis, downlink control channels (PDCCH: Physical Downlink Control Channel, EPDCCH: Enhanced Physical Downlink Control Channel, etc.), a broadcast channel (PBCH) and so on are used as downlink channels. User data, higher layer control information and predetermined SIBs (System Information Blocks) are communicated by the PDSCH. Downlink control information (DCI) is communicated by the PDCCH and the EPDCCH.

Also, in the radio communication system 1, an uplink shared channel (PUSCH: Physical Uplink Shared Channel), which is used by each user terminal 20 on a shared basis, and an uplink control channel (PUCCH: Physical Uplink Control Channel) are used as uplink channels. User data and higher layer control information are communicated by the PUSCH.

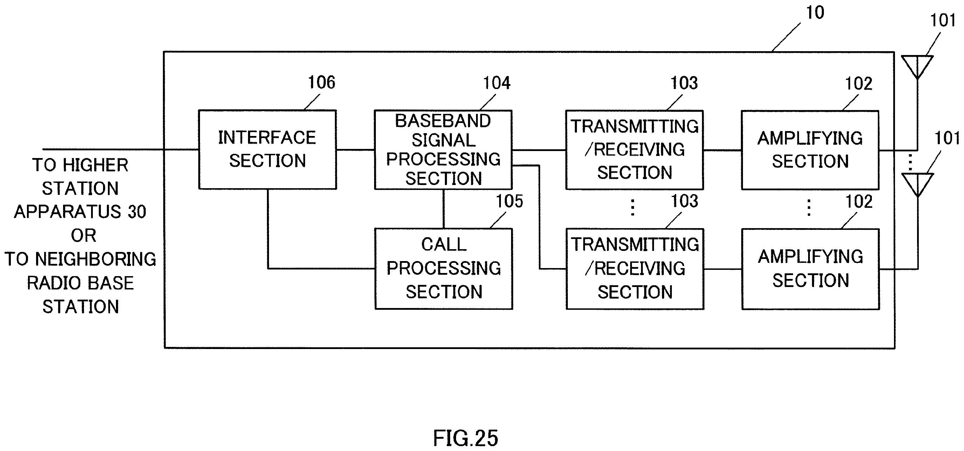

FIG. 25 is a diagram to show an overall structure of a radio base station 10 (which covers the radio base stations 11 and 12) according to the present embodiment. As shown in FIG. 25, the radio base station 10 has a plurality of transmitting/receiving antennas 101 for MIMO communication, amplifying sections 102, transmitting/receiving sections 103, a baseband signal processing section 104, a call processing section 105 and an interface section 106.

User data to be transmitted from the radio base station 10 to a user terminal 20 on the downlink is input from the higher station apparatus 30, into the baseband signal processing section 104, via the interface section 106.

In the baseband signal processing section 104, a PDCP layer process, division and coupling of user data, RLC (Radio Link control) layer transmission processes such as an RLC retransmission control transmission process, MAC (Medium Access Control) retransmission control, including, for example, an HARQ transmission process, scheduling, transport format selection, channel coding, an inverse fast Fourier transform (IFFT) process and a pre-coding process are performed, and the result is forwarded to each transmitting/receiving section 103. Furthermore, downlink control signals are also subjected to transmission processes such as channel coding and an inverse fast Fourier transform, and are forwarded to each transmitting/receiving section 103.

Also, the baseband signal processing section 104 reports, to the user terminal 20, control information (system information) for allowing communication in the cell, through higher layer signaling (for example, RRC signaling, broadcast signal and so on). The information for allowing communication in the cell includes, for example, the uplink or downlink system bandwidth and so on.

Also, it is possible to transmit assist information (for example, DL TPC information and/or the like) regarding communication in the unlicensed band from a radio base station (for example, radio base station 11) to the user terminal in the licensed band.

Each transmitting/receiving section 103 converts the downlink signals, which are pre-coded and output from the baseband signal processing section 104 on a per antenna basis, into a radio frequency band. The amplifying sections 102 amplify the radio frequency signals having been subjected to frequency conversion, and transmit the signals through the transmitting/receiving antennas 101.

On the other hand, as for the uplink signals, radio frequency signals that are received in the transmitting/receiving antennas 101 are each amplified in the amplifying sections 102, converted into baseband signals through frequency conversion in each transmitting/receiving section 103, and input into the baseband signal processing section 104.

In the baseband signal processing section 104, the user data that is included in the input uplink signals is subjected to an FFT process, an IDFT process, error correction decoding, a MAC retransmission control receiving process, and RLC layer and PDCP layer receiving processes, and the result is forwarded to the higher station apparatus 30 via the interface section 106. The call processing section 105 performs call processing such as setting up and releasing communication channels, manages the state of the radio base station 10 and manages the radio resources.

The interface section 106 transmits and receives signals to and from neighboring radio base stations (backhaul signaling) via an inter-base station interface (for example, optical fiber, the X2 interface, etc.). Alternatively, the interface section 106 transmits and receives signals to and from the higher station apparatus 30 via a predetermined interface.

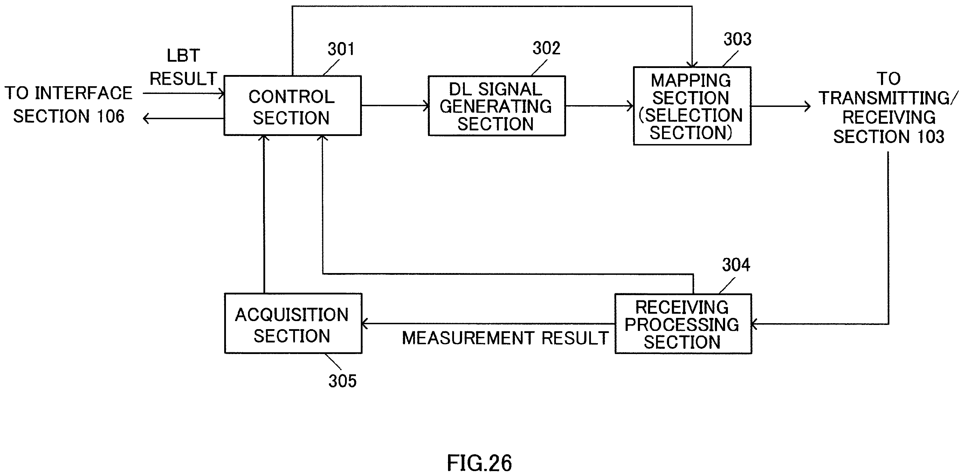

FIG. 26 is a diagram to show a functional structure of the radio base station 11 according to the present embodiment. Note that the following functional structure is formed with the baseband signal processing section 104 provided in the radio base station 11, and so on. Note that, although FIG. 26 only shows function blocks that represent the characteristic parts of the present embodiment, assume that the radio base station 11 has other function blocks that are required for radio communication as well.

As shown in FIG. 26, the radio base station 11 has a control section (scheduler) 301, a DL signal generating section 302, a mapping section 303, a receiving process section 304 and an acquiring section 305.

The control section (scheduler) 301 controls the scheduling of downlink data signals that are transmitted in the PDSCH and downlink control signals that are communicated in the PDCCH or the enhanced PDCCH (EPDCCH). Also, the control section (scheduler) 301 controls the scheduling of system information, synchronization signals, downlink reference signals such as the CRS and the CSI-RS, and so on. Note that, when the licensed band and the unlicensed band are scheduled with one control section (scheduler) 301, the control section 301 controls the transmission of DL signals that are transmitted in the licensed band cells and the unlicensed band cells.

When the control section 301 controls transmission in the unlicensed band, the control section 301 controls the transmission of DL signals in the unlicensed band based on the result of LBT executed in the unlicensed band. In this case, the result of LBT executed in the unlicensed band cells is output to the control section 301. For example, when DL transmission in the unlicensed band cell is carried out from a transmission point (for example, RRH and so on) apart from the licensed band cells, the LBT result is reported to the control section 301 via a backhaul link. When the DL transmission in the unlicensed band cell is carried out from the same transmission point as the licensed band cell, it is possible to execute LBT in the receiving process section 304 and report the LBT result to the control section 301.

If, as a result of LBT in the unlicensed band, the control section 301 judges that the unlicensed band channel is in the idle state from the measurement result of received signal intensity, the control section 301 executes control so that the BRS is transmitted in all the candidate symbol after the symbol in which LBT was executed. Also, the control section 301, when judging that the unlicensed band channel is in the idle state, executes control so that DL signals are transmitted using the unlicensed band. Also, using the licensed band, the control section 301 commands the user terminal 20 to measure the DL signals transmitted in the unlicensed band (measurement) and feed back the measurement results. To be more specific, the control section 301 commands the DL signal generating section 302 to generate information that relates to an unlicensed band measurement command, a measurement result feedback command, and so on.

The DL signal generating section 302 generates DL signals based on commands from the scheduler 301. As for the DL signals, for example, DL data signals, downlink control signals, and reference signals may be used. When DL signals are transmitted using the unlicensed band based on LBT results, the DL signal generating section 302 includes the information that relates to an unlicensed band measurement command, a measurement result feedback command and so on, in the downlink control signals to transmit in the licensed band.

The mapping section 303 controls the mapping of DL signals based on commands from the control section 301. The mapping section 303 functions as a selection section, and controls mapping by selecting the symbol to execute LBT from a plurality of candidate symbols, randomly, with equal probability.

The receiving process section 304 performs receiving processes including, for example, decoding, demodulation and so on, with respect to UL signals transmitted from the user terminal 20. Upon detecting a measurement result (measurement report) that is transmitted from the user terminal 20 via the licensed band, the receiving process section 304 outputs this to the acquiring section 305.

The acquiring section 305 acquires a measurement result that has been measured in the unlicensed band. Also, the acquiring section 305 outputs the measurement result (measurement report) to the control section 301, and the control section 301 can control the unlicensed band cells to transmit DL data to the user terminal based on this measurement result.

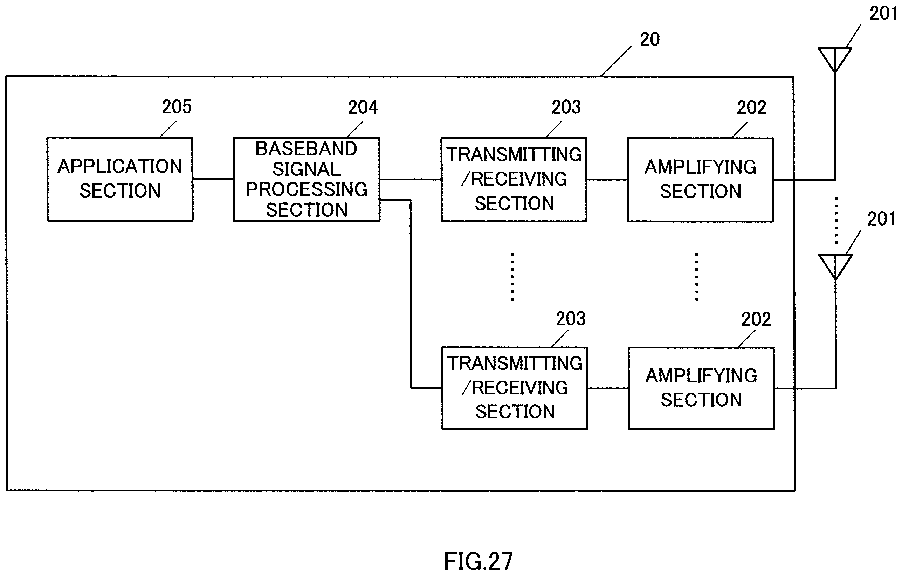

FIG. 27 is a diagram to show an overall structure of a user terminal 20 according to the present embodiment. As shown in FIG. 27, the user terminal 20 has a plurality of transmitting/receiving antennas 201 for MIMO communication, amplifying sections 202, transmitting/receiving sections 203, a baseband signal processing section 204 and an application section 205.

As for downlink data, radio frequency signals that are received in the plurality of transmitting/receiving antennas 201 are each amplified in the amplifying sections 202, and subjected to frequency conversion and converted into the baseband signal in the transmitting/receiving sections 203. This baseband signal is subjected to an FFT process, error correction decoding, a retransmission control receiving process and so on in the baseband signal processing section 204. In this downlink data, downlink user data is forwarded to the application section 205. The application section 205 performs processes related to higher layers above the physical layer and the MAC layer, and so on. Furthermore, in the downlink data, broadcast information is also forwarded to the application section 205.

Meanwhile, uplink user data is input from the application section 205 to the baseband signal processing section 204. In the baseband signal processing section 204, a retransmission control (H-ARQ: Hybrid ARQ) transmission process, channel coding, precoding, a DFT process, an IFFT process and so on are performed, and the result is forwarded to each transmitting/receiving section 203. The baseband signal that is output from the baseband signal processing section 204 is converted into a radio frequency band in the transmitting/receiving sections 203. After that, the amplifying sections 202 amplify the radio frequency signals having been subjected to frequency conversion, and transmit the resulting signals from the transmitting/receiving antennas 201.

The transmitting/receiving sections 203 can receive DL signals from the licensed band and the unlicensed band. Also, the transmitting/receiving sections 203 have only to be capable of transmitting UL signals at least with respect to the licensed band. Obviously, the transmitting/receiving sections 203 may be structured to be capable of transmitting UL signals with respect to the unlicensed band as well. Also, the transmitting/receiving sections 203 function as receiving sections to receive the information about an unlicensed band measurement command or a measurement result feedback command, by using the licensed band.

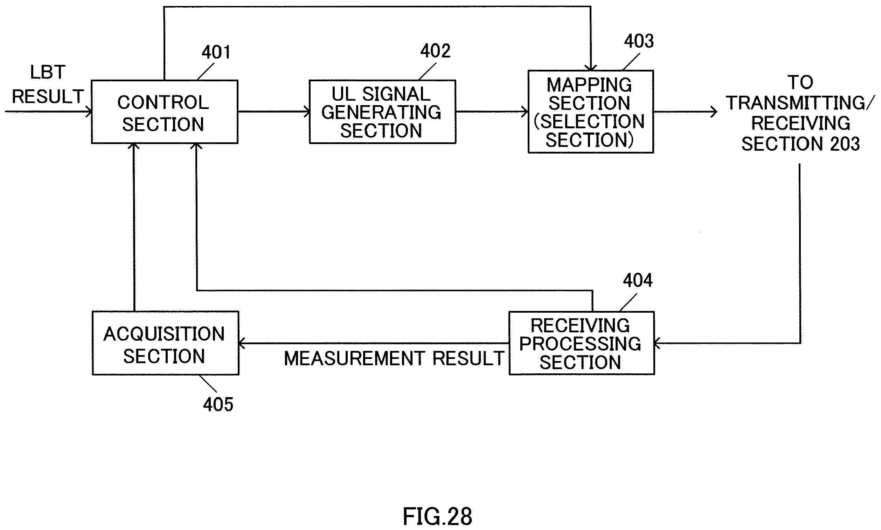

FIG. 20 is a diagram to show a functional structure of a user terminal 20 according to the present embodiment. Note that the following functional structure is formed with the baseband signal processing section 204 and so on provided in user terminal 20. Note that, although FIG. 28 only shows function blocks that represent the characteristic parts of the present embodiment, assume that the user terminal 20 has other function blocks that are required for radio communication as well.

As shown in FIG. 28, the user terminal 20 has a control section 401, a UL signal generating section 402, a mapping section 403, a receiving process section 404 and an acquiring section 405.

The control section 401 controls the UL signal transmission processes for the radio base station 10 (including reporting of measurement results and so on). When the control section 401 controls transmission in the unlicensed band, the control section 401 controls the transmission of UL signals in the unlicensed band based on the result of LBT executed in the unlicensed band. In this case, the result of LBT, executed in the unlicensed band cell, is output to the control section 401.

If, as a result of LBT in the unlicensed band, the control section 401 judges that the unlicensed band channel is in the idle state from the measurement result of received signal intensity, the control section 401 executes control so that the BRS is transmitted in all the candidate symbol after the symbol in which LBT was executed. Also, the control section 401, when judging that the unlicensed band channel is in the idle state, executes control so that UL signals are transmitted using the unlicensed band.

The UL signal generating section 402 generates UL signals based on commands from the control section 401. When UL signals are transmitted in the unlicensed band based on LBT results, the UL signal generating section 402 includes the information about an unlicensed band measurement command, a measurement result feedback command and so on in the uplink control signals to transmit in the licensed band.

The mapping section 403 controls the mapping of UL signals based on commands from the control section 401. The mapping section 403 functions as a selection section, and controls mapping by selecting the symbol to execute LBT from a plurality of candidate symbols, randomly, with equal probability.

The receiving process section 304 performs receiving processes including, for example, decoding, demodulation and so on, with respect to the DL signals transmitted in the licensed band and the unlicensed band.

The acquiring section 405 acquires the measurement result having been measured in the unlicensed band. Also, the acquiring section 405 outputs the measurement result (measurement report) to the control section 401, and the control section 401 can control the unlicensed band cells to transmit UL data based on this measurement result.

The present invention is by no means limited to the above embodiment and can be implemented in various modifications. The sizes and shapes illustrated in the accompanying drawings in relationship to the above embodiment are by no means limiting, and may be changed as appropriate within the scope of optimizing the effects of the present invention. Besides, implementations with various appropriate changes may be possible without departing from the scope of the object of the present invention.

The disclosure of Japanese Patent Application No. 2014-101527, filed on May 15, 2014, including the specification, drawings and abstract, is incorporated herein by reference in its entirety.

## Claims

1. A radio base station that communicates with a user terminal that is capable of using a licensed band and an unlicensed band, the radio base station comprising:
a control section that controls transmission of downlink signals in the unlicensed band using LBT (Listen Before Talk);
a selection section that selects a symbol to execute LBT, randomly, with equal probability, from a plurality of candidate symbols; and
an acquiring section that acquires a measurement result of received signal intensity in an LBT period,
wherein, when the control section judges that a channel of the unlicensed band is in an idle state from the measurement result of received signal intensity, the control section executes control so that a beacon reference signal is transmitted in all candidate symbols that follow the symbol in which LBT was executed.

2. The radio base station according to claim 1, wherein, when the control section judges that the channel of the unlicensed band is in a busy state from the measurement result of received signal intensity, the beacon reference signal is not transmitted.

3. The radio base station according to claim 1, wherein the beacon reference signal is a cell-specific reference signal.

4. The radio base station according to claim 1, wherein the selection section does not select a last symbol in the plurality of candidate symbols as the symbol to execute LBT.

5. The radio base station according to claim 1, wherein the unlicensed band is a carrier for downlink communication only.

6. The radio base station according to claim 1, wherein:
in the unlicensed band, radio communication is performed using a radio frame of a time division duplex scheme; and
the control section executes control so that LBT is performed before downlink communication takes place in the radio frame of the time division duplex scheme.

7. The radio base station according to claim 1, wherein the control section executes control so that a subframe and a timing to perform LBT are indicated to the user terminal.

8. A user terminal that is capable of communicating with a radio base station by using a licensed band and an unlicensed band, the user terminal comprising:
a control section that controls transmission of uplink signals in the unlicensed band by using LBT (Listen Before Talk);
a selection section that selects a symbol to execute LBT, randomly, with equal probability, from a plurality of candidate symbols; and
an acquiring section that acquires a measurement result of received signal intensity in an LBT period is measured,
wherein, when the control section judges that a channel of the unlicensed band is in an idle state from the measurement result of received signal intensity, the control section executes control so that a beacon reference signal is transmitted in all candidate symbols that follow the symbol in which LBT was executed.

9. The user terminal according to claim 8, wherein:
in the unlicensed band, radio communication is performed using a radio frame of a time division duplex scheme; and
the control section executes control so that LBT is performed before uplink communication takes place in the radio frame of the time division duplex scheme.

10. A radio communication system comprising a radio base station and user terminal that communicate using a licensed band an unlicensed band, wherein:
in the unlicensed band, radio communication is performed using a radio frame of a time division duplex scheme;
the radio base station comprises:
a control section that controls transmission of downlink signals in the unlicensed band using LBT (Listen Before Talk) before downlink communication takes place in the radio frame of the time division duplex scheme;
a selection section that selects a symbol to execute LBT, randomly, with equal probability, from a plurality of candidate symbols; and
an acquiring section that acquires a measurement result of received signal intensity in an LBT period is measured;
when the control section judges that a channel of the unlicensed band is in an idle state from the measurement result of received signal intensity, the control section executes control so that a beacon reference signal is transmitted in all candidate symbols that follow the symbol in which LBT was executed;
the user terminal comprises:
a control section that controls transmission of uplink signals in the unlicensed band by using LBT (Listen Before Talk) before uplink communication takes place in the radio frame of the time division duplex scheme;
a selection section that selects a symbol to execute LBT, randomly, with equal probability, from the plurality of candidate symbols; and
an acquiring section that acquires a measurement result of received signal intensity in the LBT period is measured; and
when the control section judges that the channel of the unlicensed band is in the idle state from the measurement result of received signal intensity, the control section executes control so that the beacon reference signal is transmitted in all candidate symbols that follow the symbol in which LBT was executed.
